# EUROPÄISCHE PATENTSCHRIFT

(11) **EP 3 113 919 B1**
(45) Veröffentlichungstag und Bekanntmachung des Hinweises auf die Patenterteilung: **15.04.2020**
(21) Anmeldenummer: 15708503.6
(22) Anmeldetag: 05.03.2015
(51) Int. Cl.: B27D 5/00, B29C 63/00

(54) **BEARBEITUNGSVERFAHREN ZUM BESCHICHTEN EINES FLÄCHENABSCHNITTS**
PROCESS FOR EDGEBANDING
PROCÉDÉ POUR APPLICATION DE BANDE DE CHANT

(30) Priorität: 05.03.2014 DE 102014204005
(43) Veröffentlichungstag der Anmeldung: 11.01.2017
(73) Patentinhaber: HOMAG GmbH, 72296 Schopfloch (DE)
(72) Erfinder: REICH, Klaus, 72296 Schopfloch (DE); FRIESE, Stefan, 72296 Schopfloch (DE); GRINGEL, Martin, 72296 Schopfloch (DE)
(74) Vertreter: Hoffmann Eitle
(86) Internationale Anmeldenummer: PCT/EP2015/054616
(87) Internationale Veröffentlichungsnummer: WO 2015/132339

(56) Entgegenhaltungen:
- EP-A1- 0 583 753
- EP-A1- 2 345 518
- EP-A2- 2 732 911
- DE-A1- 4 025 596
- DE-A1-102011 008 123

## Beschreibung

### TECHNISCHES GEBIET

Die vorliegende Erfindung bezieht sich auf ein Verfahren zum Beschichten eines Flächenabschnitts, insbesondere Schmalflächenabschnitts, eines plattenförmigen Werkstücks mit einem Beschichtungsmaterial, wobei das Werkstück bevorzugt zumindest abschnittsweise aus Holz, Holzwerkstoffen, Kunststoff oder dergleichen ausgebildet ist, nach dem Oberbegriff von Patentanspruch 1. Ein solches Verfahren ist aus dem Dokument DE102011008123A1 bekannt.

### STAND DER TECHNIK

Der Anmelderin sind Verfahren zum Beschichten einer Schmalfläche eines plattenförmigen Werkstücks mit einem Beschichtungsmaterial bekannt, bei denen die zu beschichtende Schmalfläche gegenüber der Plattenebene schräg, d.h. mit einem Winkel ungleich 90°, angeordnet ist, oder senkrecht, d.h. mit einem Winkel von 90°, angeordnet ist und in Richtung der Werkstückschmalfläche eine Krümmung aufweist.
So bezieht sich beispielsweise die EP 2 332 718 A2 auf ein 5-Achsbearbeitungszentrum mit einem Anleimaggregat, welches über drei translatorische Achsen und zwei rotatorische Achsen in eine gewünschte Neigung zu einer zu beschichtenden Schmalfläche eines Werkstücks bringbar ist.
Ferner zeigt die EP 2 474 398 A2 ein Bearbeitungszentrum zur Bearbeitung plattenförmiger Werkstücke mit einer Bekantungseinheit, die um eine Achse parallel zur Werkstückebene schwenkbar gelagert ist, sodass eine gegenüber der Plattenebene geneigte Schmalfläche mit einem Beschichtungsmaterial beschichtbar ist.

Den Verfahren im Stand der Technik ist jedoch gemeinsam, dass mit diese eine beschränkte Beschichtungsvielfalt aufweisen.
Weiterhin offenbart die DE 4025596 A1 eine Kantenverkleidungsvorrichtung mit einem entlang einer zu verkleidenden Kante eines Werkstücks bewegbaren Rahmen, der mindestens zwei Paare von Führungs- und Andrückrollen aufweist, die in Anpassung an die Breite des Werkstücks gegeneinander verstellbar sind. Die Achsen dieser Rollen verlaufen parallel zu den Seitenflächen des Werkstücks und bilden einen Winkel im Bereich von 80° bis 88° zu der Längsachse des Rahmens. Dem vorderen Paar von Führungs- und Andrückrollen folgt eine Antriebsrolle, die mit einem Rollenpaar zur Förderung des Verkleidungsbandes in Antriebsverbindung steht. Die Antriebsrolle befindet sich im Reibeingriff mit der zu verkleidenden Kante. Das Verkleidungsband ist einseitig mit einem Heißkleber beschichtet und wird durch ein Heißluftgebläse auf Klebetemperatur erhitzt. Das Verkleidungsband mit der erhitzten Kleberschicht wird an einem Führungselement geführt und mit Anpressrollen (60) an die zu verkleidende Kante angepresst.

### DARSTELLUNG DER ERFINDUNG

Es ist daher Aufgabe der vorliegenden Erfindung, ein Verfahren bereitzustellen, mit dem eine größere Vielfalt von Flächen, insbesondere Schmalflächen, eines plattenförmigen Werkstücks beschichtet werden kann.
Diese Aufgabe wird erfindungsgemäß durch ein Verfahren nach Anspruch 1 gelöst.

Besonders bevorzugte Weiterbildungen der Erfindung sind in den abhängigen Ansprüchen angegeben.
Der Erfindung liegt der Gedanke zu Grunde, dass die beschränkte Beschichtungsvielfalt des Verfahrens im Stand der Technik vor allem darin begründet ist, dass diese keine kontinuierliche und während der Beschichtung erfolgende Verstellung des Beschichtungsaggregats ermöglichen bzw. vorsehen.
Erfindungsgemäß wird daher ein Verfahren zum Beschichten eines Flächenabschnitts, insbesondere Schmalflächenabschnitt, eines plattenförmigen Werkstücks mit einem Beschichtungsmaterial, wobei das Werkstück bevorzugt zumindest abschnittsweise aus Holz, Holzwerkstoffen, Kunststoff oder dergleichen ausgebildet ist, bereitgestellt, dass den Schritt des Beschichtens des Flächenabschnitt mit dem Beschichtungsmaterial mit einem Beschichtungsaggregat umfasst, wobei der Flächenabschnitt in Beschichtungsrichtung mit einem sich ändernden Winkel gegenüber der Plattenebene ausgebildet ist, zur Plattenebene und eine Krümmung in Beschichtungsrichtung aufweist. Dabei wird das Beschichtungsaggregat während der Bearbeitung maschinell so verstellt, dass das Beschichtungsaggregat zu dem sich in Bearbeitung befindenden Teil des Flächenabschnitts eine konstante Lage aufweist.

Dieses erfindungsgemäße Verfahren stellt eine nicht bekannte Beschichtungsvielfalt bereit. So lassen sich Werkstückflächen, insbesondere Schmalflächen, eines plattenförmigen Werkstücks, die entlang der Fläche eine sich verändernde Orientierung aufweisen, kontinuierlich, d.h. insbesondere in einem Arbeitsdurchgang, mit einem Beschichtungsmaterial beschichten. Ebenso ist die Beschichtung von Formen, also dreidimensionalen Gebilden, wie zum Beispiel Griffmulden, möglich. Dabei wird die große Beschichtungsvielfalt des erfindungsgemäßen Verfahrens vor allem dadurch bereitgestellt, dass eine Beschichtung in drei Dimensionen ermöglicht wird. Beispielsweise können so drei dimensional ausgebildete Schmalflächen eines plattenförmigen Werkstücks beschichtet werden. Ebenso wird mit dem erfindungsgemäßen Verfahren das Beschichten bogenförmiger Flächen von plattenförmigen Werkstücken, d.h. von Flächen, die eine Krümmung in Erstreckungsrichtung aufweisen, und die schräg gegenüber der Plattenebene angeordnet sind ermöglicht. Eine schräge Anordnung gegenüber der Plattenebene wird erfindungsgemäß als eine Neigung der Fläche gegenüber der Platteneben mit einem Neigungswinkel 0°<|α|<90° verstanden. Im Rahmen der vorliegenden Erfindung bezieht sich der Neigungswinkel einer Fläche gegenüber der Plattenebene auf den Winkelbetrag, d.h. die Neigungsrichtung ist nicht von Relevanz.

Das erfindungsgemäße Verfahren eröffnet der Anmelderin vollkommen neue Geschäftsfelder. So kann mit diesem Verfahren eine nach ästhetischen Gesichtspunkten ausgebildete Schmalfläche beschichtet werden. Die Beschichtung kann daher als Designelement eingesetzt werden. Ferner unterliegt das Design einer Schmalfläche nicht mehr den technischen der Individualisierung in der Möbelindustrie von bedeutsamem Vorteil. Beispielsweise kann mit der vorliegenden Erfindung ein Schrank mit einer grifflosen Front bereitgestellt werden, indem beschichtete Griffmulden entlang der Werkstückschmalfläche vorgesehen werden.

Erfindungsgemäß weist der zu beschichtende Flächenabschnitt in Beschichtungsrichtung einen sich ändernden Winkel gegenüber der Plattenebene und eine Krümmung auf. Diese Ausgestaltung führt zu dem Vorteil, dass eine zusätzliche Beschichtungsvielfalt bereitgestellt wird.

Das Beschichtungsmaterial kann dem zu beschichtenden Flächenabschnitt zumindest abschnittsweise mit Übermaß zugeführt werden. Dies führt zu dem Vorteil, dass sich das Beschichtungsmaterial auch in geneigten Abschnitten des zu beschichtenden Flächenabschnitts entlang der gesamten Flächenabschnittshöhe erstreckt. So ist die Höhe, hier ist die Höhe des zu beschichtenden Flächenabschnitts in der Flächenabschnittebene gemeint, abhängig von dem Neigungswinkel des Flächenabschnitts zur Plattenebene. In einem weiteren Schritt kann anschließend der gegebenenfalls vorhandene Überstand des Beschichtungsmaterials in Bezug auf Plattenober- und/oder Unterseite plangefräst werden.

In einer weiteren bevorzugten Ausführungsform wird das Beschichtungsmaterial und/oder das Werkstück vor, während und/oder nach dem Beschichten erwärmt. Die Erwärmung führt zu dem Vorteil, dass das Beschichtungsmaterial einfach und beschädigungsfrei verformbar, vor allem auch in dessen Höhenerstreckungsrichtung, wird, sodass eine einfache und qualitativ hochwertige Beschichtung auch dreidimensional geformter Flächen, insbesondere Schmalflächen, ermöglicht wird.

Das Beschichtungsaggregat kann dabei eine Energiequelle aufweisen, die bevorzugt ausgewählt ist aus Laserquelle, LED-Quelle, Heißluftquelle, Ultraschallquelle, UV-Quelle, Mikrowellenquelle, Infrarotquelle und Plasmaquelle.

### KURZE BESCHREIBUNG DER ZEICHNUNGEN

Fig. 1 zeigt eine perspektivische Ansicht eines ersten beispielhaften Beschichtungsaggregats.
Fig. 2 zeigt eine perspektivische Ansicht eines zweiten beispielhaften Beschichtungsaggregats.
Fig. 3 zeigt eine perspektivische Ansicht eines dritten beispielhaften Beschichtungsaggregats.
Fig. 4 zeigt eine perspektivische Ansicht eines exemplarischen Bauteils, welches mit dem erfindungsgemäßen Verfahren unter Verwendung einer beispielhaften Vorrichtung hergestellt wurde.
Fig. 5 zeigt eine Draufsicht auf das exemplarische Bauteil, welches in Fig. 4 gezeigt ist.
Fig. 6 ist ein Zeit-Winkel Diagramm, welches die Verstellwinkelverläufe der A- und C-Achse der in Fig. 3 gezeigten Vorrichtung beim Beschichten der Schmalfläche des in Figs. 4 und 5 gezeigten exemplarischen Bauteils darstellt.

### DETAILLIERTE BESCHREIBUNG BEVORZUGTER AUSFÜHRUNGSFORMEN

Im Folgenden werden bevorzugte Ausführungsformen der vorliegenden Erfindung unter Bezugnahme auf die beigefügten Zeichnungen beschrieben. Die im Folgenden beschriebenen Ausführungsformen können ganz oder teilweise kombiniert werden, um weitere Ausführungsformen auszubilden.

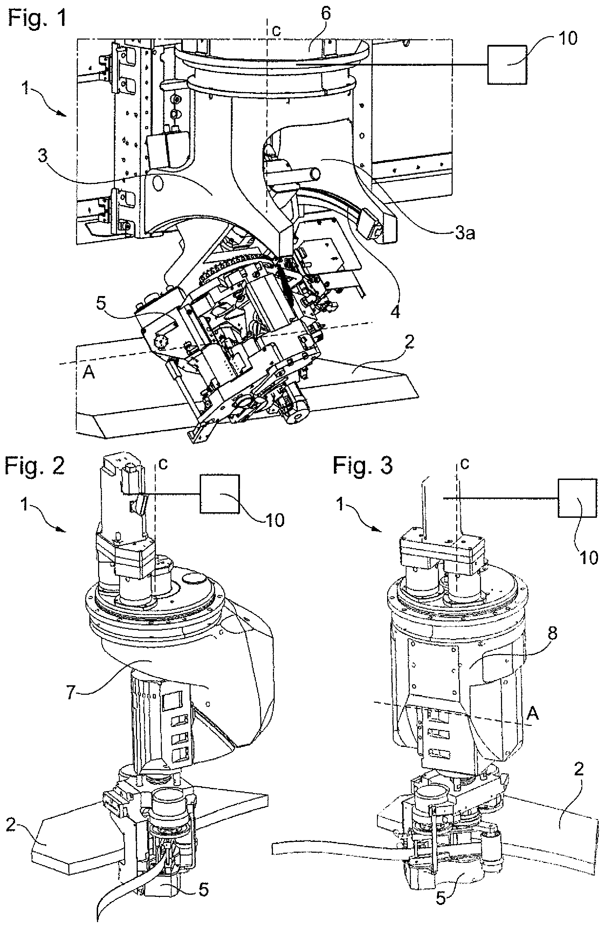

Die in den Figs. 1 bis 3 gezeigten Vorrichtungen eignen sich bevorzugt zum Beschichten von Werkstücken, die zumindest abschnittsweise aus Holz, Holzwerkstoffen, Kunststoff oder dergleichen ausgebildet sind, wie sie beispielsweise im Bereich der Möbel- und Bauelementeindustrie zum Einsatz kommen. Dabei kann es sich beispielsweise um Massivholz- oder Spanplatten, Leichtbauplatten, Sandwichplatten, oder dergleichen handeln.

Das Beschichtungsmaterial ist bevorzugt ein Kantenband, welches aus unterschiedlichen Materialien, wie beispielsweise Kunststofffurnier, Papier, Pappe, Metall etc. und vielfältigen Kombinationen hiervon, ausgebildet sein kann. Dabei wird das Beschichtungsmaterial bevorzugt in einer Rollenform vorgesehen, kann aber beispielsweise auch in Form von Einzelabschnitten bereitgestellt werden. Ferner kann das Beschichtungsmaterial eine Funktionsschicht aufweisen, die durch Energieeintrag (beispielsweise Erwärmung oder Strahlung, wie Laserstrahlung) haftende Eigenschaften entfaltet, sodass das Beschichtungsmaterial an ein Werkstück über die Funktionsschicht gefügt werden kann. Dabei kann die Funktionsschicht Mittel zur Erhöhung der Wärmeleitfähigkeit, wie beispielsweise Polyolefine und/oder Metallpartikel aufweisen. Ferner kann die Funktionsschicht Absorber für Laserlicht oder andere Strahlungsquellen aufweisen. Alternativ kann die Funktionsschicht auch separat zwischen Beschichtungsmaterial und Werkstück zugeführt werden.

Fig. 1 zeigt eine erste beispielhafte Vorrichtung. Die in Fig. 1 gezeigte Bearbeitungsvorrichtung 1 ist ein Bearbeitungszentrum zum Beschichten von Werkstücken 2. Die Vorrichtung 1 der ersten bevorzugten Ausführungsform weist eine Schwenkeinrichtung 3 mit einem Führungsgehäuse 3a und einer Schwenkführung 4 zum Führen einer Schwenkbewegung um eine Schwenkachse A auf. Dabei ist ein Bearbeitungsaggregat 5, hier ein Beschichtungsaggregat, in der Schwenkführung 4 der Schwenkeinrichtung 3 so gelagert, dass dieses relativ zum Führungsgehäuse 3a verschwenkbar ist. Die Schwenkführung 4 ist derart ausgestaltet, dass die Schwenkachse A nicht durch die Schwenkführung 4 hindurchgeht, sondern zu dieser beabstandet angeordnet ist. Ferner weist die Schwenkeinrichtung 3 einen Schwenkantrieb für die Schwenkbewegung des Beschichtungsaggregats 5 auf. Die Schwenkbewegung des Beschichtungsaggregats 5 erfolgt in der bogenförmigen Schwenkführung 4, wobei das Beschichtungsaggregat 5 bevorzugt mit einem Winkel +/- 65°C zur Plattenebene des Werkstücks 2 verschwenkt werden kann.

Darüber hinaus weist die Bearbeitungsvorrichtung 1 eine Rotationseinrichtung 6 zur Rotation der Schwenkeinrichtung 3 samt des Beschichtungsaggregats 5 um eine Rotationsachse C auf, die bevorzugt senkrecht zur Schwenkachse A angeordnet ist. Bevorzugt läuft die Rotationsachse C durch das Bearbeitungsaggregat 5 hindurch. Auch weist die Einrichtung eine Einrichtung zum translatorischen Verfahren der Schwenkeinrichtung 3 in alle drei Raumrichtungen auf.

Figs. 2 und 3 zeigen eine zweite und dritte beispielhafte Vorrichtung. Diese sind jeweils als 5-Achsbearbeitungszentrum ausgebildet. Dabei zeigt Fig. 2 eine zweite beispielhafte Vorrichtung, bei welcher das 5-Achsbearbeitungszentrum 1 einen kardanischen 5-Achskopf 7 aufweist, an dem ein Beschichtungsaggregat 5 angebracht ist. Die dritte beispielhafte Vorrichtung, welche in Fig. 3 gezeigt ist, umfasst einen kartesischen 5-Achskopf 8, an welchem ein Beschichtungsaggregat 5 angebracht ist.

Das Beschichtungsaggregat 5 der zweiten und dritten Beispiele ist mittels des Bearbeitungszentrums in drei translatorischen Raumrichtungen verfahrbar und zusätzlich um zwei rotatorische Achsen schwenkbar. Beispielsweise ist das Beschichtungsaggregat 5 des kartesischen 5-Achskopfs 8 um die Achse C, die bevorzugt senkrecht zur Werkstückebene 2 angeordnet ist, und um die Achse A, welche bevorzugt parallel zur Werkstückebene 2 angeordnet ist, verschwenkbar.

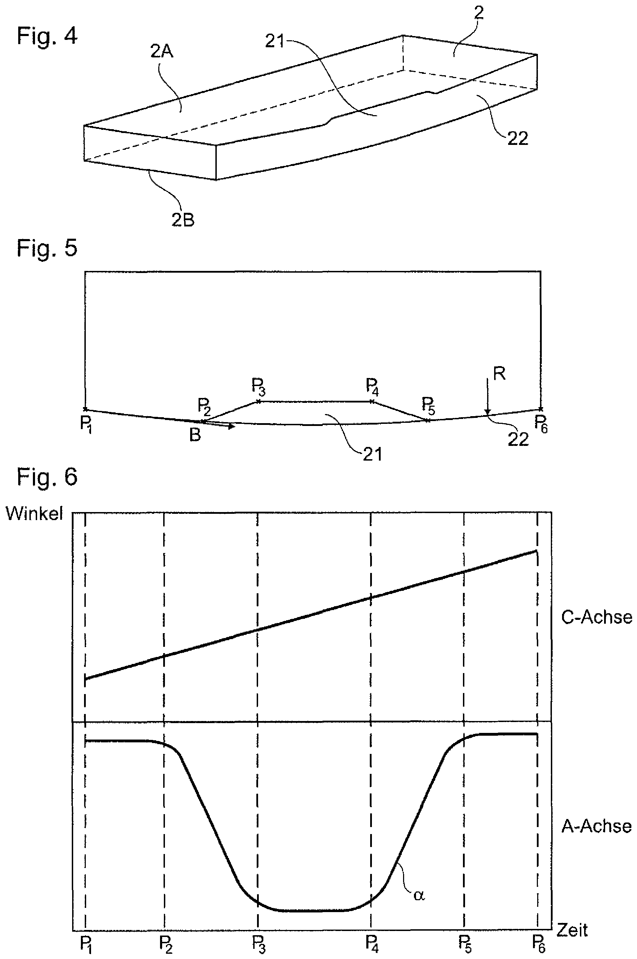

Allen drei Beispielen ist gemeinsam, dass diese eine Steuereinrichtung 10 aufweisen. Die Steuereinrichtung 10 ist dabei eingerichtet, das Beschichtungsaggregat 5 entlang einer zu beschichtenden Schmalfläche so zu verstellen, dass das Aggregat eine konstante Lage zu dem sich in Bearbeitung befindenden Werkstückabschnitt aufweist. Insbesondere ist die Steuereinrichtung 10 eingerichtet, diese konstante Lage auch dann bereitzustellen, wenn der zu beschichtende Schmalflächenabschnitt des Werkstücks 2 eine sich ändernde dann bereitzustellen, wenn der zu beschichtende Schmalflächenabschnitt des Werkstücks 2 eine sich ändernde Orientierung entlang der Schmalfläche 2 aufweist. Diese Orientierungsänderung ist erfindungsgemäß ein sich ändernder Winkel der Schmalfläche gegenüber der Plattenebene. Bei einer Änderung des Winkels α des zu beschichtenden Schmalflächenabschnitts gegenüber der Plattenebene, ist die Steuereinrichtung 10 beispielsweise für die erste und dritte Ausführungsform eingerichtet, das Beschichtungsaggregat 5 entsprechend der Neigungswinkeländerung während der Bearbeitung um die A-Achse zu verschwenken. Die Steuereinrichtung 10 ist bevorzugt auch eingerichtet, diese Bewegungen zu überlagern. Ferner ist die Steuereinrichtung 10 eingerichtet, diese Bewegungen kontinuierlich auszuführen, d.h. in einem Arbeitsdurchgang, ohne das die Vorrichtung 1 gestoppt wird.
Im Folgenden wird eine bevorzugte Ausführungsform des erfindungsgemäßen Verfahrens unter Bezugnahme auf die Figs. 4 bis 6 beschrieben. Die zuvor beschriebenen Vorrichtungen der ersten bis dritten Ausführungsform sind alle geeignet, das im Folgenden beschriebe Verfahren auszuführen; es wird jedoch am Beispiel der ersten und dritten bevorzugten Ausführungsform beschrieben.
Das in Fig. 4 gezeigte Werkstück 2, welches mit dem erfindungsgemäßen Verfahren beschichtet wurde, weist eine Griffmulde 21 auf, die an einer Schmalfläche 22 des Werkstücks 2 ausgebildet ist. Genauer gesagt weist die Schmalfläche 22 einen Radius R auf, der in Fig. 5 gezeigt ist, sodass die Schmalfläche 22 bogenförmig ausgebildet ist. Die Griffmulde 21 verläuft von der Plattenoberseite 2A, an welcher diese in das Werkstück 2 hineinragt und damit in Bezug auf den Radius R der Schmalseite zurückversetzt ist, zu der Werkstückunterseite 2B, an welcher diese in den Schmalflächenverlauf der Werkstückplatte 2 übergeht und damit dem Radiusverlauf R der Schmalfläche 22 folgt. Anders ausgedrückt, ragt die Mulde 21 an der Werkstückunterseite 2B nicht in die Werkstückplatte 2 hinein. Die Griffmulde 21 ist in dieser bevorzugten Ausführungsform mittig an der Schmalfläche 22 des Werkstücks 2 ausgebildet. Dementsprechend weist die Werkstückschmalseite 22 des Werkstücks 2 in Beschichtungsrichtung B eine sich verändernde Neigung α gegenüber der Plattenebene und eine Krümmung, einen Bogenform, in Richtung der Schmalfläche 22 auf.
Beim Beschichten der Werkstückschmalfläche 22 wird ein Beschichtungsmaterial über das Beschichtungsaggregat 5 dem sich in Bearbeitung befindenden Abschnitt der Schmalfläche 22 zugeführt. Das Beschichtungsmaterial wird dabei vor dem Fügen an die Schmalfläche 22 mit einer in der Vorrichtung 1 vorgesehenen Energiequelle erwärmt. Ferner wird das Beschichtungsmaterial mit Übermaß zugeführt.
Die Beschichtung der Schmalfläche 22 mit der Griffmulde 21 unterteilt sich in fünf Abschnitte: P1 bis P2, P2 bis P3, P3 bis P4, P4 bis P5 und P5 bis P6. Die Beschichtungsverfahrensschritte des Abschnitts P1 bis P2 gleichen sich mit Ausnahme der Rotationsrichtungen der einzelnen Achsen der Vorrichtung 1 mit denen des Abschnitts P5 bis P6, und die Beschichtungsverfahrensschritte des Abschnitts P2 bis P3 mit denen des Abschnitts P4 bis P5, sodass lediglich die Beschichtungsverfahrensschritte der Abschnitte P1 bis P2, P2 bis P3 und P3 bis P4 hier exemplarisch beschrieben werden.

Zum Beschichten der Schmalfläche 22 wird das Beschichtungsaggregat 5 durch die Vorrichtung 1 mit einer konstanten Geschwindigkeit entlang der Werkstückschmalfläche bewegt.

In dem ersten Abschnitt P1 bis P2 der Schmalfläche 22 des Werkstücks 2 ist die Schmalfläche 22 senkrecht zur Plattenebene 2 angeordnet und weist lediglich eine Krümmung, hier eine Biegung, in Beschichtungsrichtung B auf. Um dieser Biegung zu folgen und das Beschichtungsaggregat 5 während der Beschichtung in eine konstante Lage zu dem zu bearbeitenden Abschnitt der Schmalfläche 22 zu bringen, gibt die Steuereinrichtung 10 Steuerbefehle an den Antrieb der C-Achse der Vorrichtung 1 entlang des gesamten ersten Abschnitts derart aus, dass das Beschichtungsaggregat 5 mit konstanter Geschwindigkeit um die C-Achse geschwenkt wird und damit die Lage von Aggregat 5 zu dem zu beschichtenden Werkstückabschnitt konstant ist, siehe hierzu das Zeit-winkel-Diagramm in Fig. 6.

In dem zweiten Abschnitt von P2 bis P3 weist die Schmalfläche 22 eine kontinuierliche Zunahme des Neigungswinkels α der Schmalfläche 22 gegenüber der Plattenebene auf, wobei diese weiterhin den Radius R in Beschichtungsrichtung B aufweist. Dementsprechend gibt die Steuereinrichtung 10 weiterhin Steuersignale über diesen gesamten Abschnitt an den Antrieb der C-Achse der Vorrichtung 1 aus, sodass sich das Beschichtungsaggregat 5 weiterhin mit konstanter Geschwindigkeit um die C-Achse dreht, um der Krümmung, d.h. der Biegung, des zu beschichtenden Teils der Werkstückschmalfläche 22 zu folgen und eine konstante Lage zwischen Aggregat 5 und Schmalfläche 22 herzustellen. Zusätzlich gibt die Steuereinrichtung 10 Steuersignale an den Antrieb der A-Achse der Vorrichtung 1 aus, sodass sich das Beschichtungsaggregat 5 zusätzlich um die A-Achse dreht, um der Neigungszunahme der Schmalfläche 22 gegenüber der Plattenebene 2 in diesem Abschnitt zu folgen, siehe hierzu Fig. 6.

Sobald der Punkt P3 erreicht ist, weist die Schmalfläche 22 eine konstante Neigung α gegenüber der Plattenebene, jedoch weiterhin eine Krümmung in Richtung der Schmalfläche, auf, sodass die Steuereinrichtung 10 entlang dieses dritten Abschnitts lediglich Steuersignale an den Antrieb der C-Achse ausgibt, damit das Beschichtungsaggregat 5 eine konstante Lage während der Beschichtung zu der Schmalfläche 22 aufweist.

Die Beschichtung der Abschnitte P4 bis P5 und P5 bis P6 erfolgt mit Ausnahme der Rotationsrichtungen der A- und C-Achse analog zu jener der Abschnitte P1 bis P2 bzw. P2 bis P3.

## Patentansprüche

1. Verfahren zum Beschichten eines Flächenabschnitts (22), insbesondere Schmalflächenabschnitt, eines plattenförmigen Werkstücks (2) mit einem Beschichtungsmaterial, wobei das Werkstück (2) bevorzugt zumindest abschnittsweise aus Holz, Holzwerkstoffen, Kunststoff oder dergleichen ausgebildet ist, mit dem Schritt:
Beschichten des Flächenabschnitts (22) des Werkstücks (2) mit dem Beschichtungsmaterial mit einem Beschichtungsaggregat (5), wobei der Flächenabschnitt (22) in Beschichtungsrichtung (B) mit einem sich ändernden Winkel (α) gegenüber der Plattenebene ausgebildet ist, oder unter einem Winkel 0°<|α|<90° zur Plattenebene ausgebildet ist und eine Krümmung in Beschichtungsrichtung (B) aufweist,
wobei
das Beschichtungsaggregat (5) während der Bearbeitung maschinell so verstellt wird, dass die Lage des Beschichtungsaggregats (5) zu dem sich in Bearbeitung befindenden Teil des Flächenabschnitts (22) konstant ist,
**dadurch gekennzeichnet, dass**
der Flächenabschnitt (22) in Beschichtungsrichtung (B) einen sich ändernden Winkel (α) gegenüber der Plattenebene und eine Krümmung aufweist.

2. Verfahren nach einem der vorhergehenden Ansprüche, bei dem das Beschichtungsmaterial dem Flächenabschnitt (22) zumindest abschnittsweise mit Übermaß zugeführt wird und nach der Beschichtung bevorzugt plangefräst wird.

3. Verfahren nach einem der vorhergehenden Ansprüche, bei dem das Beschichtungsmaterial und/oder das Werkstück (2) vor, während und/oder nach dem Beschichten erwärmt wird.

4. Verfahren nach einem der vorhergehenden Ansprüche, bei dem das Beschichtungsaggregat (5) eine Energiequelle aufweist, die bevorzugt ausgewählt ist aus Laserquelle, LED-Quelle, Heißluftquelle, Ultraschallquelle, UV-Quelle, Infrarotquelle, Mikrowellenquelle und Plasmaquelle.

## Claims

1. Method for coating a surface portion (22), in particular narrow surface portion, of a plate-shaped workpiece (2) with a coating material, the workpiece (2) preferably being formed at least in portions from wood, wood materials, plastics material or the like, said method comprising the step of:
coating the surface portion (22) of the workpiece (2) with the coating material by means of a coating unit (5), the surface portion (22) being designed to have an angle (α) that varies with respect to the plate plane in the coating direction (B) or to be at an angle of **0° <** |α| **< 90°** to the plate plane and having a curvature in the coating direction (B),
the coating unit (5) being moved mechanically during treatment such that the position of the coating unit (5) is constant with respect to the part of the surface portion (22) being treated, **characterised in that**, in the coating direction (B), the surface portion (22) has an angle (α) that varies with respect to the plate plane and has a curvature.

2. Method according to any of the preceding claims, wherein the coating material is supplied to the surface portion (22) in excess at least in portions and is preferably face-milled after coating.

3. Method according to any of the preceding claims, wherein the coating material and/or the workpiece (2) is heated before, during and/or after coating.

4. Method according to any of the preceding claims, wherein the coating unit (5) comprises an energy source, which is preferably selected from a laser source, LED source, hot-air source, ultrasound source, UV source, infrared source, microwave source and plasma source.

## Revendications

1. Procédé de revêtement d'une section de surface (22), en particulier section de surface étroite, d'une pièce en forme de plaque (2) avec un matériau de revêtement, dans lequel la pièce (2) est réalisée de préférence au moins par section en bois, matériaux dérivés du bois, matière plastique ou similaires, avec l'étape de :
revêtement de la section de surface (22) de la pièce (2) avec le matériau de revêtement avec un groupe de revêtement (5), dans lequel la section de surface (22) est réalisée dans la direction de revêtement (B) avec un angle variable (α) par rapport au plan de plaque, ou est réalisée selon un angle 0°<|α|<90° par rapport au plan de plaque et présente une courbure dans la direction de revêtement (B),
dans lequel
le groupe de revêtement (5) est déplacé mécaniquement pendant le traitement de sorte que la position du groupe de revêtement (5) par rapport à la partie de la section de surface (22) se trouvant en traitement est constante,
**caractérisé en ce que**
la section de surface (22) présente dans la direction de revêtement (B) un angle variable (α) par rapport au plan de plaque et une courbure.

2. Procédé selon l'une quelconque des revendications précédentes, dans lequel le matériau de revêtement est amené à la section de surface (22) au moins par section avec surdimensionnement et est surfacé de préférence après le revêtement.

3. Procédé selon l'une quelconque des revendications précédentes, dans lequel le matériau de revêtement et/ou la pièce (2) est chauffé avant, pendant et/ou après le revêtement.

4. Procédé selon l'une quelconque des revendications précédentes, dans lequel le groupe de revêtement (5) présente une source d'énergie, qui est sélectionnée de préférence parmi une source laser, une source LED, une source d'air chaud, une source d'ultrasons, une source d'UV, une source d'infrarouge, une source de micro-ondes et une source de plasma.
